# EUROPEAN PATENT SPECIFICATION

(11) **EP 2 877 617 B1**
(45) Date of publication and mention of the grant of the patent: **25.05.2016**
(21) Application number: 13752804.8
(22) Date of filing: 23.07.2013
(51) Int. Cl.: D01D 5/00, D01D 5/30, D01D 4/02

(54) **SPINNING NOZZLE FOR PRODUCING NANOFIBROUS AND MICROFIBROUS MATERIALS COMPOSED OF FIBRES HAVING A COAXIAL STRUCTURE**
SPINNDÜSE ZUR HERSTELLUNG VON NANOFASER- UND MIKROFASERMATERIALIEN AUS FASERN MIT KOAXIALSTRUKTUR
BUSE DE FILAGE DESTINÉE À PRODUIRE DES MATÉRIAUX NANOFIBREUX ET MICROFIBREUX COMPOSÉS DE FIBRES PRÉSENTANT UNE STRUCTURE COAXIALE

(30) Priority: 27.07.2012 CZ 20120514
(43) Date of publication of application: 03.06.2015
(73) Proprietor: Contipro Biotech s.r.o., 56102 Dolni Dobrouc (CZ)
(72) Inventor: POKORNY, Marek, 561 64 Jablonne nad Orlici (CZ); REBICEK, Jiri, 569 91 Jedlova (CZ); SUKOVA, Lada, 518 01 Dobruska (CZ); NOVAK, Jindrich, 14800 Praha (CZ); NOVAKOVA, Jana, 14800 Praha (CZ); VELEBNY, Vladimir, 564 01 Zamberk (CZ)
(74) Representative: Zemanová, Veronika
(86) International application number: PCT/CZ2013/000085
(87) International publication number: WO 2014/015843

(56) References cited:
- WO-A1-98/03267
- US-A- 3 204 290
- US-A- 3 492 692
- US-A- 6 051 180
- US-A1- 2006 201 390
- SHENGGUO LU ET AL: "Silicone rubber/polyvinylpyrrolidone microfibers produced by coaxial electrospinning", JOURNAL OF APPLIED POLYMER SCIENCE, vol. 128, no. 4, 19 June 2012 (2012-06-19) , pages 2273-2276, XP055054306, ISSN: 0021-8995, DOI: 10.1002/app.37848

## Description

### Technical field

The invention relates to a device for the production of nanofibrous or microfibrous materials, comprising a spinning electrode connected to one of the electric potential points of a high-voltage power supply, said electrode consisting of electrically conductive and non-conductive components, into which two different spinning mixtures are fed by means of two separate distribution channels, the latter being connected to two respective proportioning devices, one of the mixtures forming the longitudinal core of the fibre and the other one forming the longitudinal shell of the same, said nozzle being additionally passed by the air flowing around it.

### State of the art

The method of electrostatic spinning used for producing nanofibrous or microfibrous materials is based on the utilization of two electrodes connected to reversed electric potential points. In a basic arrangement, one of said electrodes serves for proportioning a polymeric solution and for shaping the same into curved forms having small radiuses of curvature. Due to the action of the forces induced by a strong electric field, a so called Taylor cone is formed and, simultaneously, a fibre is created, the latter being attracted by the electrostatic forces to the other, i.e. opposite electrode having reversed polarity and serving for capturing the flying fibres. After having been captured, the fibres successively form a continuous layer on the surface of said opposite electrode, the layer being composed of randomly arranged fibres with a small diameter (generally ranging between tens of nanometres and several micrometres). In order to actually enable the creation of a fibre in the strong electric field, a number of conditions must be met with respect to the physical and chemical properties of the polymeric solution itself as well as to the ambient influences and the geometry of the electrodes. In the case that two different materials are supplied into a suitably adapted nozzle under adherence of several other conditions, coaxial fibres can be formed, which means that every individual fibre is formed by a coaxial core made of one of the two materials and by a shell made of the other, different material. Such adapted process is referred to as coaxial electrostatic spinning or, abbreviated, as "co-electrospinning". It can be understood from the above described principle that in order to obtain such coaxial fibres, a Taylor cone, which originates both from the inside drop formed by one of the mixtures and from the enclosing outer drop formed by the other mixture, must be initiated. This can be achieved in that two different mixtures are supplied by means of a coaxial conductive nozzle.

In connection with the development of novel nanofibrous and microfibrous materials and their applications, the demands relating to extended morphological parameters of such materials continue to increase. The same applies to the requirements relating to the creation of more complex nanostructures and microstructures having extended functionalities. In the up-to-date applications, the simplified conception of a fibre consisting in that the latter is constituted by a thin, long formation having circular cross-section, is being replaced by fibres having modified nanostructures or microstructures. Such structural modifications may also include coaxial fibres formed by a core and a shell made of two different materials. A final product made up of such coaxial fibres, known as "core-shell fibres", can be used in modem medical application as well as in other industrial applications (controlled release of medications, increased surface activity of fibres, enhanced mechanical properties, increased efficiency of filtration etc.). Exemplary applications include new material used for the controlled distribution and release of medications, wherein initially a first material is released from the shell of the fibre and subsequently a second material is released from the core of the same (the reaction kinetics being controlled by the structure of the material). In addition, other particles or substances, such as viruses, bacteria, crystals or the like, can be encapsulated into the shell, which are not separately spinnable or which could be damaged or suffer from a rapid loss of viability, etc. during the spinning process. Furthermore, the shell may serve as a non-degradable barrier enabling the encapsulation of toxic substances used e.g. for the purpose of detection, diagnostics and the like. The core may conversely bind the second material (i.e. the mixture contained in the shell) onto its surface when such material is not spinnable in itself but has a function which is absolutely essential and substantial for the respective application. The inner material can be then removed in a post-treatment process with the aim to obtain fibres having hollow cross-sections. In this manner, nanochannels or microchannels can be formed, such as those enabling the specific surface are of the respective fibrous material to be increased, micropipettes to be prepared etc. Further advantages of such fibres consist in that the fibres have enhanced mechanical properties, one of the material being more significant with respect to the mechanical properties and constituting a carrying element for the other material. The whole spectrum of the possible applications, which are outlined above, obviously indicates that the importance of the development and use of such a sophisticated nanofibrous and microfibrous material will increase in the future and that the industrial production of coaxial fibres is/will be sought after.

The method of coaxial electrostatic spinning consists in that two different solutions are proportioned by means of a nozzle into a single miniature coaxial droplet, one of the solutions being fed through the inner circular nozzle and the other solution being fed through the outer circular nozzle, the outer nozzle enclosing the inner one in a close vicinity. Both the nozzles, which have small diameters (the outer one typically less than 2 mm and the inner one typically less than 1 mm), are connected to one of the potential points of a high-voltage power supply. The other pole of the high-voltage power supply is connected to the opposite collecting electrode attracting the fibres by means of the electrostatic field effect. The structural arrangement of such coaxial nozzle is described, for example, in the documents US 20060213829, WO 2012058425 and GB 2482560. There are also other patent documents dealing with the production of coaxial fibres. All of them, however, disclose the solutions based on a single coaxial nozzle which is not sufficiently productive and which is, from the practical point of view, only able to provide a nanofibrous or microfibrous material composed of coaxial fibres for laboratory purposes. Despite all of that, there is a need to find a solution for a large-scale production technology in order to enable production of coaxial nanofibrous or microfibrous materials in a real industrial manner. Such more productive solution is disclosed in the document US 20120034461 where individual coaxial nozzles having an identical structural arrangement are described, the increased production being achieved by multiplying the nozzles and by grouping them within a microchip. The system of miniature nozzles, which is described in the above document, does not constitute a solution for repeated production. In particular, it is not possible to clean the nozzles during a practical application. Another solution for the industrial production of coaxial nozzles is described in the patent specification CZ 302876 (B6). The above document discloses a solution which is based on the use of two mixtures flowing over a conductive electrode without forming a two-component droplet, necessary for obtaining a coaxial fibre, in a direct manner. When the two mixtures flow over the electrode, they are mixed in the vicinity of the latter which leads to an uncontrolled distribution of the components in the fibre being formed, i.e. in its core or in its shell. Thus, it is very easy to spin different materials independently and separately. After having flown over the electrode, the liquid mixture is not reusable and cannot be subsequently recovered in any appropriate way. This poses the main drawback with regard to the industrial production when considering the fact that natural raw materials or their constituents, which are used for the production of coaxial fibres, are relatively expensive.

The main problem related to the formation of coaxial fibres consists in the complicated and expensive manufacture of special thin coaxial nozzles. When coaxial fibres are produced in a larger scale in comparison with the laboratory one, the respective nozzles are multiplied and deployed in an area forming a spinning electrode. The solutions, which are known from the documents cited above, are very demanding as far as their maintenance is concerned and are not suitable for a long-term production of coaxial fibres. Our long-time experience shows that mixtures frequently solidify inside the thin capillaries even when simple, non-coaxial nozzles are used which requires repeated, time-demanding cleaning procedures to be carried out. In some cases, such nozzles cannot be cleaned any more. If a novel multiple spinning nozzle is devised, which enables the coaxial fibres to be produced in an industrial scale in a way other than by multiplying thin coaxial nozzles known in the art and which also enables to carry out the necessary maintenance in an easy and fast way, a unique possibility to transform the preparation of coaxial fibres from a laboratory scale to a real industrial one would be provided. Such nozzle must be able to ensure the formation of a two-component droplet (consisting from an inner droplet and an outer, enclosing one) from two independently proportioned mixtures leading to the creation of a Taylor cone having predefined coaxial composition.

### Summary of the invention

The objective of the present invention is to present a novel design solution of a highly productive nozzle which is able to produce nanofibrous or microfibrous materials composed of individual coaxial fibres which means that every fibre will be formed by a coaxial core made of one of the two types of material and by a shell made of the other, different type of material.

The objective is largely achieved by a spinning nozzle for production of nanofibrous and microfibrous materials, wherein according to the invention it comprises
- a first plate provided with at least one continuous groove for directing a first material to an outlet mouth portion of the continuous groove in a face of the first plate;
- a second plate provided with at least one continuous groove for directing a second material to an outlet mouth portion of the continuous groove of the second plate, the outlet mouth portion being arranged adjacent to the outlet mouth portion of the first plate, and
- a separating plate arranged between the first plate and the second plate for separating the continuous grooves of the first plate from the continuous grooves of the second plate, while the face of the separating plate forms with the face of the first plate and/or the face of the second plate a continuous surface in the region of the outlet mouth portions of the continuous grooves.

According to a preferred embodiment the first plate is made of a non-conductive material while the second plate and the separating plate are made of a conductive material.

According to another preferred embodiment the continuous grooves of the first plate are wider than the continuous grooves of the second plate and extend beyond the continuous grooves of the second plate on either side, the longitudinal axes of the continuous grooves overlapping each other at least in the region of the outlet mouth portions of the continuous grooves when viewed in a direction which is perpendicular to the separating plate.

According to yet another preferred embodiment the spinning nozzle comprises a third plate which is provided with continuous grooves mouthing at a face of the third plate and which adjoins the second plate, the outlet mouth portions of the continuous grooves of the third plate being arranged adjacent to the corresponding outlet mouth portions of the continuous grooves of the second plate.

According to a further embodiment the spinning nozzle comprises a fourth plate arranged spaced apart from the second plate and serving for supplying the shaping and/or heating air to the faces of the first plate, separating plate and second plate, respectively.

According to yet another preferred embodiment the spinning nozzle comprises a fifth plate, which is spaced from the third plate, and a sixth plate, which is spaced from the first plate, the fifth and sixth plates serving for supplying the shaping and/or heating air to the faces of the first plate, separating plate, second plate and third plate, respectively, from either side.

Preferably, the faces of the first plate, separating plate, second plate and third plate, respectively, form a channel in the outlet face of the spinning nozzle, the longitudinal axis of the channel being parallel to that of the face of the separating plate.

### Brief description of the drawings

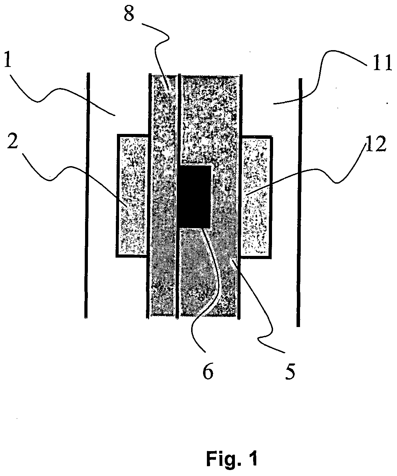

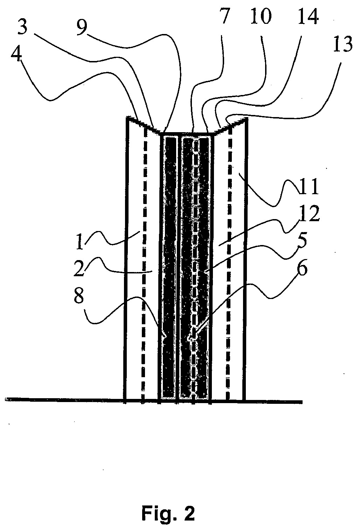

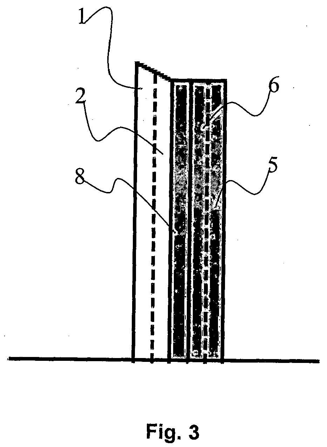

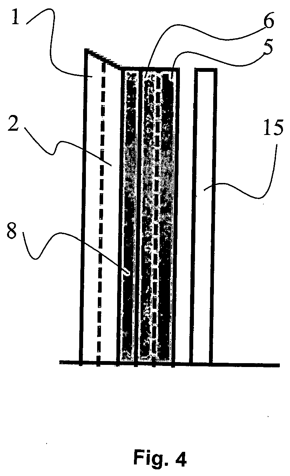

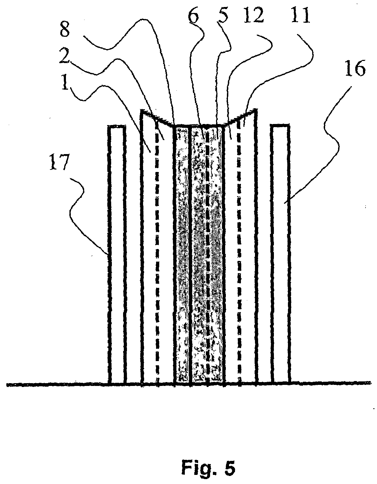

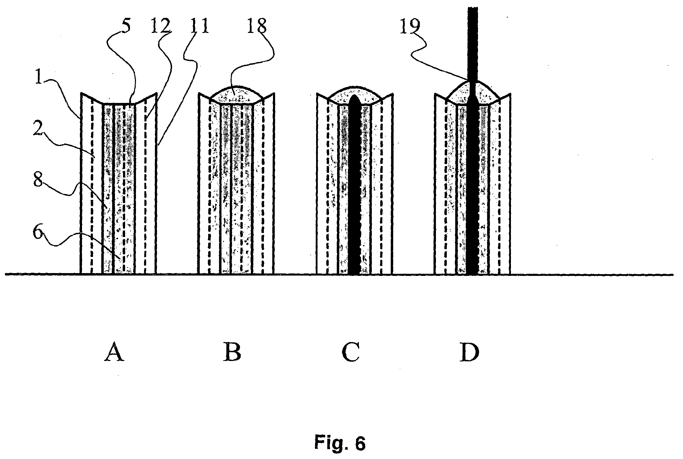

For more detail, the invention will be further described by means of the accompanying drawings wherein Fig. 1 schematically shows a top view of a portion of a spinning nozzle according to the invention, Fig. 2 schematically shows a longitudinal section of the spinning nozzle according to the invention shown in Fig. 1, Fig. 3 schematically shows a longitudinal section of a second exemplary embodiment of the spinning nozzle according to the invention, Fig. 4 schematically shows a longitudinal section of a third exemplary embodiment of the spinning nozzle according to the invention, Fig. 5 schematically shows a longitudinal section of a fourth exemplary embodiment of the spinning nozzle according to the invention and Fig. 6 schematically shows the process of formation of a coaxial fibre using the exemplary embodiment of the nozzle according to the invention as shown in Fig. 1.

### Exemplifying embodiments of the invention

Fig. 1 schematically shows the top view of a distal end of a spinning nozzle according to the invention. The first plate 1 is provided with a continuous groove 2 and adjoins the separating plate 8 such that the separating plate 8 laterally encloses the continuous groove 2. On the opposite side, the separating plate 8 is adjoined by a second plate 5 that is provided by a continuous groove 6 and adjoins the separating plate 8 such that the separating plate 8 laterally encloses the continuous groove 6. On its opposite side, the second plate 5 is adjoined by a third plate 11 that is provided by a continuous groove 12 such that the second plate 5 laterally encloses the continuous groove 12. The continuous grooves 2 and 12 of the first plate 1 and third plate 11, respectively, extend beyond the continuous groove 6 of the second plate 5 on either side, the centres of the continuous grooves 2, 6, 12 of the first, second and third plates 1,5, 11, respectively, are aligned in a common line, which would be apparent in a top view of the distal end of the hidden portion of the spinning nozzle, the common line being perpendicular to the face of the separating plate 8 that adjoins the first plate 1. The continuous groove 6 is intended for guiding the core material of the coaxial fibre while the continuous grooves 2 and 12 are intended for guiding the material of the shell encasing the core of the coaxial fibre. The second plate 5 and the separating plate 8 are made of a conductive material while the first plate 1 and third plate 11 are made of an insulating material. The first, second and third plates 1,5,11 may be provided with multiple continuous grooves 2, 6, 12, respectively, the outlet mouth portions 3, 7, 14 of the individual grooves, as shown in Fig. 2, being formed at the distal end of the spinning nozzle and having mutual arrangement which is identical to that of the corresponding mouth portions shown in Fig 1. The first, second and third plates 1, 5, 11 as well as the separating plate 8 are mutually rigidly but detachably connected, e.g. by means of screw joints. Spaced apart from the distal end of the combined spinning nozzle, a collecting electrode (not shown) is arranged. A high-voltage supply (also not shown) is wired between the collecting electrode and the second plate 5 which is connected with the separating plate 8.

Fig. 2 schematically shows the longitudinal section of the spinning nozzle according to the first exemplary embodiment of invention as shown in Fig. 1, the section being led through the plane A - A indicated in Fig. 1. It is apparent from the above view of the spinning nozzle that the face 4 of the first plate 1 along with the outlet mouth portion 3 of the continuous groove 2 of the first plate 1 and the face 13 of the third plate 11 along with the outlet mouth portion 14 of the continuous groove 12 of the third plate 11 form elevated walls of a channel, the bottom of the latter being formed by the face 9 of the separating plate 8 and the face 10 of the second plate 5 along with the outlet mouth portion 7 of the continuous groove 6 of the second plate 5.

Fig. 3 schematically shows an analogous longitudinal section of the second exemplary embodiment of the spinning nozzle. This embodiment of the spinning nozzle is different from the preceding one in that the third plate 11 is omitted.

Fig. 4 schematically shows an analogous longitudinal section of a third exemplary embodiment of the spinning nozzle. The latter nozzle is based on the second exemplary embodiment. However, it is additionally provided with a fourth plate 14 which is arranged in parallel to the second plate 5 and spaced from the same. The fourth plate 14 is typically made of a non-conductive material. The gap between the second plate 5 and the fourth plate 14 is intended for supplying an air stream, typically a warm one, for influencing the creation of the coaxial Taylor cone 19 (see Fig. 6) in the vicinity of the face of the nozzle. In an exemplary embodiment, the air blasted into such intermediate gap is heated up to reach the temperature between 20 and 100°C, the flowrate ranging from 0 do 1000 L/min.

Fig. 5 schematically shows an analogous longitudinal section of a fourth exemplary embodiment of the spinning nozzle. The latter spinning nozzle is based on the first exemplary embodiment. However, it is additionally provided with a fifth plate 16, which is arranged in parallel to the third plate 11 and spaced from the same, and with a sixth plate 17 which is arranged in parallel to the first plate 1 and spaced from the same. The gaps between the first plate 1 and the sixth plate 17 as well as between the third plate 11 and the fifth plate 16 are intended for supplying an air stream, typically a warm one, for influencing the creation of the coaxial Taylor cone 19 (see Fig. 6) in the vicinity of the face of the nozzle. Both the fifth plate 16 and the sixth plate 17 are typical made of a non-conductive material.

Fig. 6 schematically shows the process of formation of a coaxial fibre using the exemplary embodiment of the spinning nozzle according to the invention as shown in Fig. 1 and 2. During the phase A, the continuous grooves 2, 6, 12 of the first, second and third plates 1,5, 11, respectively, are apparent in the sectional view of the spinning nozzle. During the phase B, the extrusion of the first material for forming the outer shell of the microfibre or nanofibre through the continuous grooves 2 and 12 of the first and third plate 1 and 11, respectively, is apparent in the sectional view of the spinning nozzle, the extruded first material forming a droplet 18 in the channel at the face of the nozzle. During the phase C, the second material is extruded from the continuous groove 6 of the second plate 5 for forming the core of the microfibre or nanofibre, as may be seen in the sectional view of the spinning nozzle, the outlet mouth portion 7 (see Fig. 2) of the continuous groove 6 being situated between the outlet mouth portions 3 and 14 of the continuous groves 2 and 12 of the first and third plates 1 and 11, respectively. The second material is pressed into the droplet formed from the first material. After applying voltage to the spinning nozzle the coaxial Taylor cone 19 is formed, which is apparent with reference to the phase D.

In all the above embodiments, each of the first, second and third plates 1, 5, 11 may be provided with an array of continuous grooves 2, 6, 12, the respective proximal ends of said grooves being connected to the feeders of the first and second materials so that a series of parallel coaxial fibres can be produced in a single nozzle. The only prerequisite consists in that all the continuous grooves 6 of the second plate 5 have their proximal ends connected to the feeder of the core material for the future coaxial fibre, all the continuous grooves 2 and 12 of the first and third plates 1 and 11, respectively, have their proximal ends connected to the feeder of the shell material for the future coaxial fibre and the concurring triplets of the outlet mouth portions 3, 7, 14 of the continuous grooves 2, 6, 12 assume the configuration shown in Fig. 1.

It can be understood from the above described design solution of the multiple spinning nozzle that after dismantling the spinning nozzle and separating the first, second and third plates 1, 5, 11 along with the separating plate 8 the walls of the plates and particularly all the continuous grooves 2, 6, 12 become accessible, easy to clean and also sterilizable.

During the spinning process itself, the solution of the spinning nozzle disclosed herein enables various modes of application to be set up. Thus, various morphologies of the produced coaxial fibres can be obtained. The inner conductive continuous grooves 6, which form the electrode connected to one of the potential points of a high-voltage power supply (not shown), are intended for proportioning the mixture representing the first material, while the outer continuous grooves 2 and 12 formed in the first and third non-conductive plates 1 and 11 respectively, which closely adjoin the conductive second plate 5, are intended for proportioning the mixture representing the second material. Then, the spinning modes are as follows:
- If a mixture consists of two materials when the first material is different from the second one, the spinning process will lead to the formation of coaxial fibres, each fibre comprising a core made up of the first material and a shell made up of the second material.
- If the first material of the mixture is replaced by gaseous state, the spinning process will lead to the formation of hollow fibres made up merely of the second material.
- If the first material of the mixture is composed of a dispersion of particles in a gaseous or liquid medium, the spinning process will lead to the encapsulation of the dispersed particles into the fibrous structure made up of the second material. Such particles may be crystals, bacteria, viruses, medicinal substances, growth factors, DNA, polypeptides etc.
- If the first material of the mixture is composed of a dissolved substance forming a solution and the second material of the mixture is composed of a dispersion of particles in a gaseous or liquid medium, the spinning process will lead to the formation of fibres having their cores made up of the first, dissolved material and their shells made up of the second, particulate material. The particles do not need to be separately spinnable. Again, such particles may be crystals, bacteria, viruses, medicinal substances, growth factors, DNA, polypeptides etc.
- The electrode may be also employed in an electrostatic spraying process enabling nanodroplets and microdloplets having the "core-shell" structure to be formed.
- The first material of the mixture may be replaced by gaseous state, the latter being proportioned in a manner enabling the formation of a bubble inside the second material of the mixture. Then, the spinning process is based on Taylor cones formed on a thin layer of the underlying bubble inside the second material of the mixture.

### Industrial applicability

The invention is particularly useful for laboratory preparation and industrial production of fibrous materials, such as materials composed of nanofibres or microfibres having coaxial structure, by means of the electrostatic spinning method.

## Claims

1. Spinning nozzle for production of nanofibrous and microfibrous materials by means of electrostatic spinning method, **characterized in that** it comprises
- a first plate (1) provided with at least one continuous groove (2) for directing a first material to an outlet mouth portion (3) of the continuous groove (2) in a face (4) of the first plate (1);
- a second plate (5) provided with at least one continuous groove (6) for directing a second material to an outlet mouth portion (7) of the continuous groove (6) of the second plate (5), the outlet mouth portion (7) being arranged adjacent to the outlet mouth portion (3) of the first plate (1), and
- a separating plate (8) arranged between the first plate (1) and the second plate (5) for separating the continuous grooves (2) of the first plate (L) from the continuous grooves (6) of the second plate (5), while the face (9) of the separating plate (8) forms with the face (4) of the first plate (1) and/or the face (10) of the second plate (5) a continuous surface in the region of the outlet mouth portions (3; 7) of the continuous grooves (2; 6).

2. Spinning nozzle according to claim 1, **characterized in that** the first plate (1) is made of a non-conductive material while the second plate (5) and the separating plate (8) are made of a conductive material.

3. Spinning nozzle according to claim 1, **characterized in that** it comprises a third plate (11) which is provided with continuous grooves (12) mouthing at a face (13) of the third plate (11) and which adjoins the second plate (5), the outlet mouth portions (14) of the continuous grooves (12) of the third plate (11) being arranged adjacent to the corresponding outlet mouth portions (7) of the continuous grooves (6) of the second plate (5).

4. Spinning nozzle according to claim 1, **characterized in that** the continuous grooves (2) of the first plate (1) are wider than the continuous grooves (6) of the second plate (5) and extend beyond the continuous grooves (6) of the second plate (5) on either side, the longitudinal axes of the continuous grooves (2, 6) overlapping each other at least in the region of the outlet mouth portions (3, 7) of the continuous grooves (2, 6) when viewed in a projection which is perpendicular to the separating plate (8).

5. Spinning nozzle according to any of the claims 1 to 3, **characterized in that** it comprises a fourth plate (15) spaced from the second plate (5) and serving for supplying the shaping and/or heating air to the faces (4, 9, 10) of the first plate (1), separating plate (8) and second plate (5), respectively.

6. Spinning nozzle according to claim 4, **characterized in that** it comprises a fifth plate (16), which is spaced from the third plate (11), and a sixth plate (17), which is spaced from the first plate (1), the fifth and sixth plates serving for supplying the shaping and/or heating air to the faces (4, 9, 10, 13) of the first plate (1), separating plate (8), second plate (5) and third plate (11), respectively, from either side.

7. Spinning nozzle according to claim 1, **characterized in that** the faces (4, 9, 10) of the first plate (1), separating plate (8) and second plate (5), respectively, form a channel in the outlet face of the spinning nozzle, the longitudinal axis of the channel being parallel to that of the face (9) of the separating plate (8).

8. Spinning nozzle according to claim 3 and 4, **characterized in that** the faces (4, 9, 10, 13) of the first plate (1), separating plate (8), second plate (5) and third plate (11), respectively, form a channel in the outlet face of the spinning nozzle, the longitudinal axis of the channel being parallel to that of the face (9) of the separating plate (8).

## Patentansprüche

1. Verspinnungsdüse zur Herstellung von nano- und mikrofaserigen Materialen mittels eines elektrostatischen Verspinnungsverfahrens, **dadurch gekennzeichnet, dass** sie umfasst
- eine erste Platte (1), die mit mindestens einer durchgehenden Nut (2) versehen ist, die zum Richten eines ersten Materials zu einem in einer Stirnfläche (4) der ersten Platte (1) angeordneten Ausgangsmündungsabschnitt (3) der durchgehenden Nut (2) dient;
- eine zweite Platte (5), die mit mindestens einer durchgehenden Nut (6) versehen ist, die zum Richten eines zweiten Werkstoffs zu einem Ausgangsmündungsabschnitt (7) der durchgehenden Nut (6) der zweiten Platte (5) dient, wobei der Ausgangsmündungsabschnitt (7) benachbart dem Mündungsabschnitt (3) der ersten Platte (1) untergebracht ist; und
- eine Trennplatte (8), die zwischen der ersten Platte (1) und der zweiten Platte (5) angeordnet ist und die zur Trennung der durchgehenden Nuten (2) der ersten Platte (1) von den durchgehenden Nuten (6) der zweiten Platte (5) vorgesehen ist, wobei die Stirnfläche (9) der Trennplatte (8) eine kontinuierliche Oberfläche mit der Stirnfläche (4) der ersten Platte (1) und/oder der Stirnfläche (10) der zweiten Platte (5) im Bereich der Ausgangsmündungsabschnitte (3; 7) der durchgehenden Nuten (2; 6) bildet.

2. Verspinnungsdüse nach Anspruch 1, **dadurch gekennzeichnet, dass** die erste Platte (1) aus einem nicht leitfähigen Werkstoff besteht, wohingegen die zweite Platte (5) und die Trennplatte (8) aus einem leitfähigen Werkstoff bestehen.

3. Verspinnungsdüse nach Anspruch 1, **dadurch gekennzeichnet, dass** sie eine dritte Platte (11) umfasst, die mit mehreren, in eine Stirnfläche (13) einmündenden durchgehenden Nuten (12) versehen ist und die an die zweite Platte (5) anliegt, wobei die Ausgangsmündungsabschnitte (14) der durchgehenden Nuten (12) der dritten Platte (11) benachbart den Ausgangsmündungsabschnitte (7) der durchgehenden Nuten (6) der zweiten Platte (5) untergebracht sind.

4. Verspinnungsdüse nach Anspruch 1, **dadurch gekennzeichnet, dass** die durchgehenden Nuten (2) der ersten Platte (1) breiter sind als die durchgehenden Nuten (6) der zweiten Platte (5) und dabei die durchgehenden Nuten (6) der zweiten Platte (5) beidseitig überragen, wobei die Längsachsen der durchgehenden Nuten (2; 6) sich gegenseitig zumindest in dem Bereich der Ausgangsmündungsabschnitte (3; 7) der durchgehenden Nuten (2; 6) überlappen, wenn sie in einer Projektion betrachtet werden, die sich senkrecht zu der Trennplatte (8) erstreckt.

5. Verspinnungsdüse nach einem der Ansprüche 1 bis 3, **dadurch gekennzeichnet, dass** sie eine vierte Platte (15) umfasst, die von der zweiten Platte (5) beabstandet ist und die zum Zuführen von Form- und/oder Heizluft zu den Stirnflächen (4; 9; 10) der ersten Platte (1), der Trennplatte (8) bzw. der zweiten Platte (5) dient.

6. Verspinnungsdüse nach Anspruch 4, **dadurch gekennzeichnet, dass** sie eine fünfte Platte (16), die von der dritten Platte (11) beabstandet ist, sowie eine sechste Platte (17), die von der ersten Platte (1) beabstandet ist, umfasst, wobei die fünfte und sechste Platte zum Zuführen von Form- und/oder Heizluft zu den Stirnflächen (4; 9; 10; 13) der ersten Platte (1), der Trennplatte (8), der zweiten Platte (5) bzw. der dritten Platte (11) von beiden Seiten dienen.

7. Verspinnungsdüse nach Anspruch 1, **dadurch gekennzeichnet, dass** die Stirnflächen (4; 9; 10) der ersten Platte (1), der Trennplatte (8) bzw. der zweiten Platte (5) einen in der Ausgangsstirnfläche der Verspinnungsdüse angeordneten Kanal bilden, wobei die Längsachse des Kanals parallel zur der Längsachse der Stirnfläche (9) der Trennplatte (8) verläuft.

8. Verspinnungsdüse nach Anspruch 3 oder 4, **dadurch gekennzeichnet, dass** die Stirnflächen (4; 9; 10; 13) der ersten Platte (1), der Trennplatte (8), der zweiten Platte (11) bzw. der dritten Platte (11) einen in der Ausgangsstirnfläche der Verspinnungsdüse angeordneten Kanal bilden, wobei die Längsachse des Kanals parallel zur der Längsachse der Stirnfläche (9) der Trennplatte (8) verläuft.

## Revendications

1. La buse de filage pour la production des matériaux nanofibreux et micro fibreux au moyen du procédé de filage électrostatique, **caractérisé en ce qu'**elle comprend
- une première plaque (1) munie d'au moins une rainure (2) continue pour diriger un premier matériau à une partie (3) de sortie de l'embouchure de la rainure (2) continue en tête (4) de la première plaque (1) ;
- une seconde plaque (5) munie d'au moins une rainure (6) continue pour diriger un second matériau à une partie (7) de sortie d'embouchure de la rainure (6) continue de la deuxième plaque (5), la partie (7) de sortie d'embouchure étant disposée adjacente à la partie (3) de sortie d'embouchure de la première plaque (1), et
- une plaque (8) de séparation disposée entre la première plaque (1) et la deuxième plaque (5) pour séparer les rainures (2) continues de la première plaque (1) des rainures (6) continues de la seconde plaque (5), tandis que la tête (9) de la plaque (8) de séparation forme avec la tête (4) de la première plaque (1) et / ou la tête (10) de la deuxième plaque (5) une surface continue dans la région des parties (3, 7) de sortie de l'embouchure des rainures (2; 6) continues.

2. La buse de filage selon la revendication 1, **caractérisé en ce que** la première plaque (1) est faite d'un matériau non-conducteur tandis que la seconde plaque (5) et la plaque de séparation (8) sont constituées d'un matériau conducteur.

3. La buse de filage selon la revendication 1, **caractérisé en ce qu'**elle comprend une troisième plaque (11) qui est munie des rainures (12) continues débouchant dans la tête (13) de la troisième plaque (11) et qui est adjacente à la deuxième plaque (5), les parties (14) de sortie d'embouchure des rainures (12) continues de la troisième plaque (11) étant disposées adjacentes aux parties (7) de sortie d'embouchure correspondante des rainures (6) continues de la deuxième plaque (5).

4. La buse de filage selon la revendication 1, **caractérisé en ce que** les rainures continues (2) de la première plaque (1) sont plus larges que les rainures (6) continues de la deuxième plaque (5) et surpassent des rainures (6) continues de la deuxième plaque (5) de chaque côté, les axes longitudinaux des rainures (2, 6) continues se recouvrant mutuellement au moins dans la zone des parties (3, 7) de sortie d'embouchure des rainures (2, 6) continues, quand regardant en projection qui est perpendiculaire à la plaque (8) de séparation.

5. La buse de filage selon l'une quelconque des revendications 1 à 3, **caractérisé en ce qu'**elle comprend une quatrième plaque (15) espacée de la seconde plaque (5) et servant à amener de l'air façonnant et / ou chauffant aux têtes (4, 9, 10) de la première plaque (1), de la plaque (8) de séparation et de la seconde plaque (5), respectivement.

6. La buse de filage selon la revendication 4, **caractérisé en ce qu'**elle comprend une cinquième plaque (16) qui est espacée de la troisième plaque (11), et une sixième plaque (17) qui est espacée de la première plaque (1), les plaques cinquième et sixième servant à amener de l'air façonnant et / ou chauffant aux têtes (4, 9, 10, 13) de la première plaque (1), la plaque (8) de séparation, la deuxième plaque (5) et la troisième plaque (11), respectivement, de part et d'autre.

7. La buse de filage selon la revendication 1, **caractérisé en ce que** les têtes (4, 9, 10) de la première plaque (1), la plaque (8) de séparation et la seconde plaque (5), respectivement, forment un canal dans la tête de sortie de la buse de filage, l'axe longitudinal du canal étant parallèle à celui de la tête (9) de la plaque (8) de séparation.

8. La buse de filage selon la revendication 3 et 4, **caractérisé en ce que** les têtes (4, 9, 10, 13) de la première plaque (1), la plaque (8) de séparation, la deuxième plaque (5) et la troisième plaque (11) respectivement, forment un canal dans la tête de sortie de la buse de filage, l'axe longitudinal du canal étant parallèle à celui de la tête (9) de la plaque (8) de séparation.
